# EUROPEAN PATENT APPLICATION

(11) **EP 4 807 832 A1**
(43) Date of publication of application: **16.09.2026**
(21) Application number: 25216640.0
(22) Date of filing: 18.11.2025
(51) Int. Cl.: H01M 10/04, H01M 50/107, H01M 50/152, H01M 50/167, H01M 50/342

(54) **SECONDARY BATTERY**

(30) Priority: 11.03.2025 KR 20250031246
(71) Applicant: SAMSUNG SDI CO., LTD., Yongin-si, Gyeonggi-do 17084 (KR)
(72) Inventor: KIM, Dae Kyu, 17084 Yongin-si (KR)
(74) Representative: Marks & Clerk LLP

(57) **Abstract**

A secondary battery includes a can having a substantially cylindrical geometry, the can including an open end and a closed end; an electrode assembly accommodated within the can; and a cap assembly including a vent plate and a gasket, the vent plate disposed on the open end facing the electrode assembly, the gasket including an insulating material and disposed between the vent plate and the can, wherein a partial area of the open end has a thickness greater than a thickness of a remaining area. The secondary battery having a certain target crimping force may have a thickness of a crimping portion, except for a beading portion, being adjusted. If the thickness of the crimping portion is reduced, crimping may be released at a low pressure, resulting in quick opening and gas release.

## Description

### BACKGROUND

### 1. Field

Embodiments of the present disclosure relate to a secondary battery.

### 2. Description of the Related Art

While primary batteries are not designed to be (re)charged, secondary (also known as rechargeable) batteries are batteries that are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

This Background section is for the general understanding of the background of the present disclosure, and therefore, it may contain information that does not constitute related (or prior) art.

### SUMMARY

Embodiments of the present disclosure provide a secondary battery capable of controlling gas release capability by adjusting a thickness of a crimping portion.

Embodiments of the present disclosure provide a secondary battery including: a cylindrical can with one end opened and the other end closed; an electrode assembly accommodated in the can; and a cap assembly provided with a vent plate disposed on the opened one end of the can to face the electrode assembly, and a gasket made of an insulating material and disposed between the vent plate and the can, wherein a partial area of the opened end of the can has a thickness greater than that of a remaining area.

Embodiments of the present disclosure provide a secondary battery including: a can having a substantially cylindrical geometry, the can including an open end and a closed end; an electrode assembly accommodated within the can; and a cap assembly including a vent plate and a gasket, the vent plate disposed on the open end, i.e. facing the electrode assembly, the gasket including an insulating material and disposed between the vent plate and the can, wherein a partial area of the open end has a thickness greater than a thickness of a remaining area.

In some embodiments, the can may include: a circular bottom part; and a cylindrical side part extending from the bottom part.

In some embodiments, the can further includes: a bottom part having a substantially circular geometry; and a side part having a substantially cylindrical geometry, the side part extending from the bottom part.

In some embodiments, the side part may include: a beading portion disposed to be adjacent to the end and provided to be concave inward; and a crimping portion provided by bending the end inward.

In some embodiments, the side part includes: a beading portion adjacent to the open end and has a concave inward geometry; and a crimping portion having an end bent inwardly circumferentially.

In some embodiments, the crimping portion may have a thickness less than that of the side part below the beading portion.

In some embodiments, the crimping portion has a thickness less than a thickness of the side part below the beading portion.

In some embodiments, the side part may include: a side lower area below the beading portion; and a side upper area above the beading portion.

In some embodiments, the crimping portion may have a thickness less than that of the side upper area.

In some embodiments, the crimping portion has a thickness less than a thickness of the side upper area.

In some embodiments, the crimping portion may be thinner than the side upper area by at most about 20%.

In some embodiments, the thickness of the crimping portion is less than the thickness of the side upper area by less than or equal to about 20%.

In some embodiments, the crimping portion may include: a crimping round portion connected to the side upper area and having a rounded cross-sectional shape; and a crimping straight portion connected to the crimping round portion and having a straight cross-sectional shape.

In some embodiments, the crimping portion includes: a crimping round portion connected to and above the side upper area and having a round cross-sectional geometry; and a crimping straight portion connected to the crimping round portion and having a straight cross-sectional geometry.

In some embodiments, the crimping round portion may have a thickness less than that of the side upper area.

In some embodiments, the crimping round portion has a thickness less than a thickness of the side upper area.

In some embodiments, the crimping straight portion may have a thickness less than that of the crimping round portion.

In some embodiments, the crimping straight portion has a thickness less than the thickness of the crimping round portion.

In some embodiments, the crimping round portion may have a thickness less by at most about 20% than that that of the side upper area.

In some embodiments, the crimping round portion has a thickness less than the thickness of the side upper area by less than or equal to about 20%.

In some embodiments, the crimping straight portion may have a thickness less by at most about 30% than that that of the side upper area.

In some embodiments, the crimping straight portion has a thickness less than the thickness of the side upper area by less than or equal to about 30%.

In some embodiments, the side lower area and the side upper area may have substantially the same thickness.

In some embodiments, the cap assembly may further include: a cap-down disposed between the vent plate and the electrode assembly; and an insulator made of an insulating material and disposed between the vent plate and the cap-down.

In some embodiments, the cap assembly further includes: a cap-down disposed between the vent plate and the electrode assembly; and an insulator disposed between the vent plate and the cap-down.

In some embodiments, the cap assembly may further include a cap-up spaced apart from the vent plate and disposed to face the outside of the can.

In some embodiments, the cap assembly further includes a cap-up spaced apart from the vent plate and faces the exterior of the can.

In some embodiments, a terminal hole may be defined to pass through the bottom part.

In some embodiments, the terminal hole may have a size equal to or less than that of the bottom part.

In some embodiments, the terminal hole has a size less than or equal to a size of the bottom part.

In some embodiments, the secondary battery may further include: a terminal coupled to the terminal hole; and a gasket disposed between the terminal and the bottom part to insulate the terminal from the bottom part.

In some embodiments, the secondary battery further includes: a terminal coupled to the terminal hole; and a second gasket disposed between the terminal and the bottom part.

In some embodiments, the terminal may be electrically connected to the electrode assembly.

In some embodiments, the terminal may have a positive polarity.

At least some of the above and other features of the invention are set out in the claims.

### BRIEF DESCRIPTION OF THE DRAWINGS

The drawings illustrate embodiments of the present disclosure, and further describe aspects and features of the present disclosure along with the detailed description of the present disclosure. Thus, the present disclosure should not be construed as being limited to the drawings:
FIG. 1 illustrates a perspective view of a secondary battery according to embodiments of the present disclosure;
FIG. 2 illustrates a cross-sectional view of the secondary battery of FIG. 1 according to embodiments of the present disclosure;
FIG. 3 illustrates an enlarged cross-sectional view of a cap assembly of FIG. 2 according to embodiments of the present disclosure;
FIG. 4 illustrates a schematic cross-sectional view of a can according to embodiments of the present disclosure;
FIG. 5 illustrates a detailed cross-sectional view of the can according to embodiments of the present disclosure;
FIG. 6 illustrates a cross-sectional view of a crimping portion for adjusting crimping force according to embodiments of the present disclosure;
FIG. 7 illustrates a perspective view of the secondary battery according to embodiments of the present disclosure;
FIG. 8 illustrates a cross-sectional view of the secondary battery of FIG. 7 according to embodiments of the present disclosure; and
FIG. 9 illustrates an enlarged cross-sectional view of a portion A of FIG. 8 according to embodiments of the present disclosure;
FIG. 10 is a perspective view showing a battery pack including a secondary battery according to embodiments of the present disclosure;
FIG. 11 is a perspective view showing a battery pack including a secondary battery according to embodiments of the present disclosure;
FIG. 12 is a perspective view of a vehicle including a battery pack according to embodiments of the present disclosure; and
FIG. 13 is a side view of a vehicle including a battery pack according to embodiments of the present disclosure.

### DETAILED DESCRIPTION

Embodiments of the present disclosure are described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technicalaspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

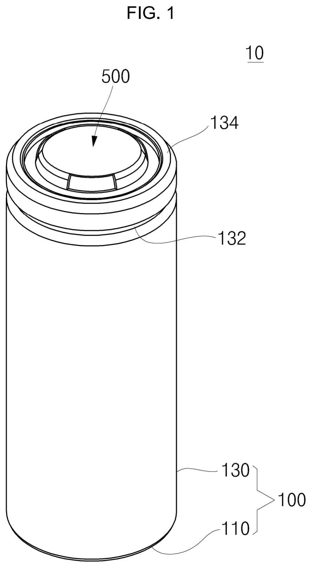

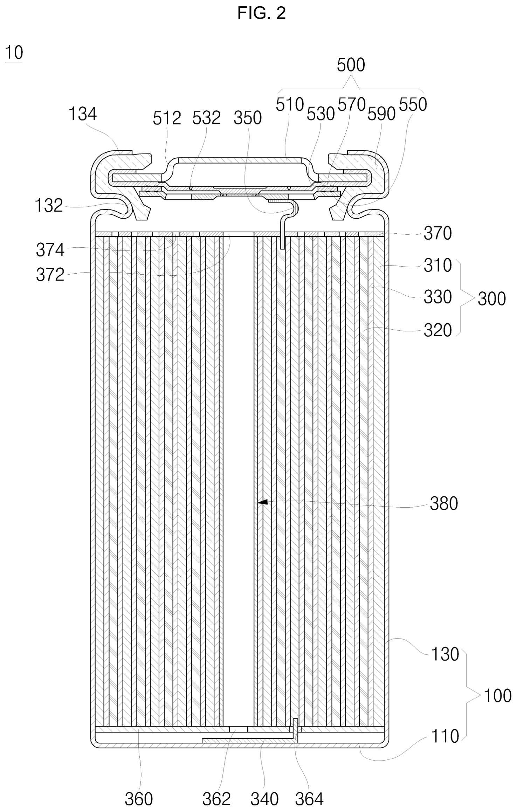

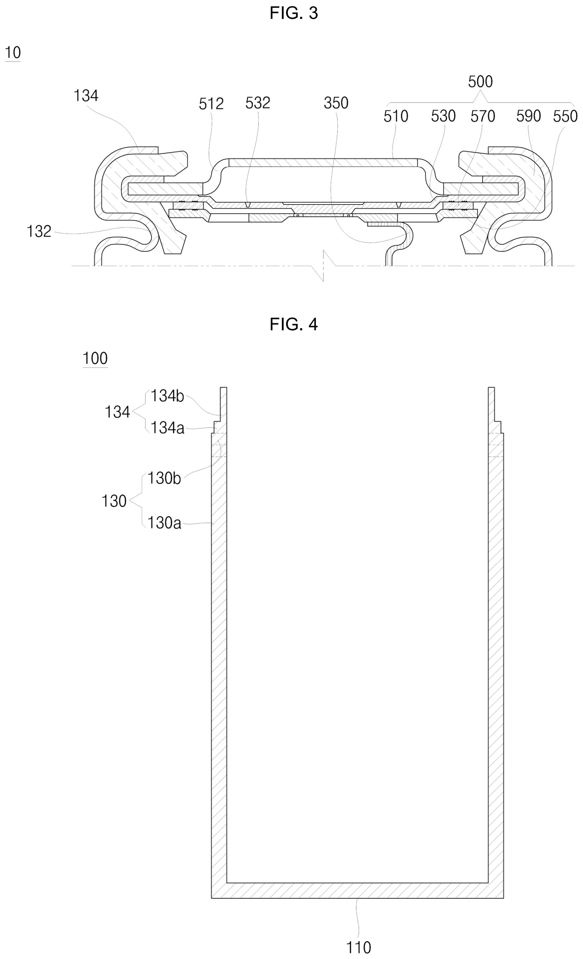

FIG. 1 illustrates a perspective view of a secondary battery. FIG. 2 illustrates a cross-sectional view of the secondary battery of FIG. 1. FIG. 3 illustrates an enlarged cross-sectional view of a cap assembly of FIG. 2.

Referring to FIGS. 1 to 3, a secondary battery 10 may be a cylindrical battery. The secondary battery 10 may include a can 100, an electrode assembly 300, and a cap assembly 500. The electrode assembly 300 may be electrically connected to the can 100 and the cap assembly 500 by a first electrode tab 340 and a second electrode tab 350, respectively. In some embodiments, a first insulating plate 360 may be disposed between the electrode assembly 300 and the can 100. A second insulating plate 370 may be disposed between the electrode assembly 300 and the cap assembly 500.

The can 100 may define an outer appearance of the secondary battery 10 and may have a cylindrical geometry with one open end. The can 100 may include or be referred to as a case, a housing or an exterior. The can 100 may include a metal such as steel, nickel-plated steel, a steel alloy, aluminum, an aluminum alloy, a deep drawing cold sheet (SPCE), or a laminate film, or a plastic material forming a pouch. The can 100 may include a circular bottom part 110 and a cylindrical side part 130 extending upward from the bottom part 110. An upper end of the side part 130 may be opened, and the cap assembly 500 may be coupled to the opened end. In some embodiments, a beading portion 132 and a crimping portion 134 may be disposed at the upper end of the side part 130. An upper portion of the can 100 is opened, but a lower portion of the can 100 may be opened. The electrode assembly 200 may be accommodated within the can 100 together with an electrolyte.

The beading portion 132 may be recessed inward and adjacent to the end of the side part 130. The crimping portion 134 may be spaced apart from the beading portion 132 and may have the end of the side part 130 bent inward. The cap assembly 500 may be disposed between the beading portion 132 and the crimping portion 134. In some embodiments, the cap assembly 500 may be fixed so as not to be separated from the can 100 by the beading portion 132 and the crimping portion 134.

The electrode assembly 300 may include or be referred to as an electrode group, an electrode body, or a jelly roll. The electrode assembly 300 may include a first electrode plate 310, a second electrode plate 320, and a separator 330. The electrode assembly 300 may have the separator 330 interposed between the first electrode plate 310 and the second electrode plate 320, and the first electrode plate 310, the separator 330, and the second electrode plate 320 may be wound in a cylindrical geometry. In some embodiments, the electrode assembly 300 may have a substantially central region that is hollow. The hollow central region may also be referred to as a core 380. An optional cylindrical center pin (not shown) may be inserted into the core 380 for support. The core 380 may serve as a passage through which a pressure is released if an internal pressure of the secondary battery 10 becomes greater than a reference pressure. In some embodiments, as the internal pressure increases, internal gas may ascend through the core 380 rupturing a notch 532 of a vent plate 530. The gas may escape through the cap-up 510, reducing the internal pressure of the secondary battery 10.

The first electrode plate 310 may be either a negative electrode plate or a positive electrode plate. The first electrode plate 310 may include a first base material which is a metal plate, a first active material layer provided on at least one surface of the first base material, and a first non-coating portion on which the first active material is not provided. The first non-coating portion may be referred to as the first base material. A first electrode tab 340 may be electrically connected to the first non-coating portion. In some embodiments, the first electrode plate 310 may function as a positive electrode. In some embodiments, the first electrode tab 340 may function as a negative electrode tab. The first electrode tab 340 may be made of copper or nickel.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may include graphite such as non-shaped, sheet-shaped, flake-shaped, sphere-shaped, or fiber-shaped natural graphite or artificial graphite. The amorphous carbon may include a soft carbon, a hard carbon, a mesophase pitch carbonization product, or calcined coke.

The lithium metal alloy may include lithium and a metal including Na, K, Rb, Cs, Fr, Be, Mg, Ca, Sr, Si, Sb, Pb, In, Zn, Ba, Ra, Ge, Al, or Sn.

The material capable of doping/dedoping lithium may include a Si-based negative electrode active material or a Sn-based negative electrode active material. The Si-based negative electrode active material may include silicon, a silicon-carbon composite, SiOx (0 < x < 2), or a Si-Q alloy (where Q is selected from an alkali metal, an alkaline-earth metal, a Group 13 element, a Group 14 element (excluding Si), a Group 15 element, a Group 16 element, a transition metal, a rare earth element, or a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material. When the second plate is a positive electrode plate, the positive electrode plate may include a positive current collector formed of thin aluminum foil, and a positive electrode active material layer containing a lithium-based oxide as a main component coated on at least one surface of the positive current collector. Positive uncoated regions, which are regions not coated with the positive electrode active material layer, may be formed at both ends of the positive current collector.

The negative electrode of a rechargeable lithium battery may include a current collector and a negative electrode active material layer on the current collector. The negative electrode active material layer may include a negative electrode active material, and may include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other or one another and to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may include a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, or a combination thereof.

When an aqueous binder is used as the negative electrode binder, a cellulose-based compound capable of providing viscosity may be included. The cellulose-based compound may include carboxymethyl cellulose, hydroxypropylmethyl cellulose, methyl cellulose, or an alkali metal salt thereof. The alkali metal may include Na, K, or Li.

The dry binder may include a polymer material that is fibrous. For example, the dry binder may include polytetrafluoroethylene, polyvinylidene fluoride, a polyvinylidene fluoride-hexafluoropropylene copolymer, polyethylene oxide, or a combination thereof.

The conductive material may ensure conductivity (e.g., electrical conductivity) to the electrode. Any material that does not cause a detrimental chemical change (e.g., does not cause an undesirable chemical change in the rechargeable lithium battery) while capable of conducting electrons can be used in the battery. Non-limiting examples of the conductive material may include a carbon-based material such as natural graphite, artificial graphite, carbon black, acetylene black, ketjen black, a carbon fiber, a carbon nanofiber, or a carbon nanotube; a metal-based material including copper, nickel, aluminum, or silver in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

The second electrode plate 320 may be either a negative electrode plate or a positive electrode plate. The second electrode plate 320 may include a second base material which is a metal plate, a second active material layer provided on at least one surface of the second base material, and a second non-coating portion on which the second active material is not provided. The second non-coating portion may be referred to as the second base material. A second electrode tab 350 may be electrically connected to the second non-coating portion. For example, the second electrode plate 320 may function as a positive electrode. In some embodiments, the second electrode tab 350 can function as a positive electrode tab. The second electrode tab 350 may include aluminum.

The positive electrode active material may include a compound (lithiated intercalation compound) that is capable of intercalating and deintercalating lithium. Specifically, a composite oxide of lithium and/or a metal including cobalt, manganese, nickel, or combinations thereof may be used.

The composite oxide may be a lithium transition metal composite oxide. Non-limiting examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

For example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8,0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8,0≤b≤0.5, 0≤c≤0.5, and 0<α<2); LiaNibCocL1dGeO2 (0.90≤a≤1.8,0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode 10 for a rechargeable lithium battery 100 may include a current collector and a positive electrode active material layer on the current collector. The positive electrode active material layer may include a positive electrode active material and may further include a binder and/or a conductive material (e.g., an electrically conductive material).

For example, the positive electrode 10 may include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other or one another and to attach the positive electrode active material to the current collector. Non-limiting examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon.

The conductive material may ensure conductivity (e.g., electrical conductivity) to the electrode. Any material that does not cause a detrimental chemical change (e.g., does not cause an undesirable chemical change in the rechargeable lithium battery) while capable of conducting electrons can be used in the battery. Non-limiting examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but the present invention is not limited thereto.

Depending on the type of the secondary battery 10, the separator 330 may be present between the positive electrode and the negative electrode.

The separator 330 may be interposed between the first electrode plate 310 and the second electrode plate 320 to serve to prevent short circuiting between the first electrode plate 310 and the second electrode plate 320 from occurring.

The separator 330 may include polyethylene, polypropylene, polyvinylidene fluoride, or a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator.

The separator 330 may include a porous substrate and a coating layer including an organic material, an inorganic material, or a combination thereof on one or both surfaces of the porous substrate.

The porous substrate may be a polymer film including polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and the inorganic material may be combined in one coating layer, or a coating layer including an organic material and a coating layer including an inorganic material may be stacked against each other.

The electrolyte for the secondary battery 10 includes the non-aqueous organic solvent and the lithium salt.

The non-aqueous organic solvent functions as a medium through which ions involved in an electrochemical reaction of the battery may migrate.

The non-aqueous organic solvent may be a carbonate-based, ester-based, ether-based, ketone-based, alcohol-based, or aprotic solvent, or a combination thereof.

The carbonate-based solvent may include a dimethyl carbonate (DMC), a diethyl carbonate (DEC), a dipropyl carbonate (DPC), a methylpropyl carbonate (MPC), an ethylpropyl carbonate (EPC), a methyl ethyl carbonate (MEC), an ethylene carbonate (EC), a propylene carbonate (PC), or a butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2,5-dimethyltetrahydrofuran, or tetrahydrofuran.

The ketone-based solvent may include cyclohexanone.

The alcohol-based solvent may include ethyl alcohol or isopropyl alcohol.

The aprotic solvent may include nitriles such as R-CN (R is a linear, branched, or circular hydrocarbon group having 2 to 20 carbon atoms and may include a double bond, an aromatic ring, or an ether group), amides such as dimethylformamide, dioxolanes such as 1,3-dioxolane and 1,4-dioxolane, or sulfolane.

A single substance thereof may be used as the non-aqueous organic solvent, or two or more substances thereof may be mixed and used as the non-aqueous organic solvent. When the carbonate-based solvents are used, a circular carbonate and a chain carbonate may be mixed and used. The circular carbonate and the chain carbonate may be mixed in a volume ratio of 1:1 to 1:9.

The lithium salt is is dissolved in an organic solvent, operates as a supply source of lithium ions in a battery, allows a secondary battery to operate, and functions to facilitate movement of lithium ions between a positive electrode and a negative electrode. Non-limiting examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis (fluorosulfonyl) imide (LiFSI), LiC₄F₉SO₃, LiN(CxF₂x+1SO₂)(CyF₂y+1SO₂) (x and y are integers from 1 to 20), lithium trifluoromethane sulfonate, lithium tetrafluoroethanesulfonate, lithium difluorobis (oxalato) phosphate (LiDFOB), or lithium bis (oxalato) borate (LiBOB).

The first insulating plate 360 may include an insulating material in a plate geometry. The first electrode plate 310 may not be electrically connected to the bottom part 110 of the can 100. In some embodiments, the first electrode plate 310 may not be in direct contact with the bottom part 110 due to the existence of the first insulating plate 360. The first insulating plate 360 may have a first hole 362 communicating with the core 380 and a second hole 364 through which the first electrode tab 340 passes. The first hole 362 may allow the gas to move toward the cap assembly 500 through the core 380 if gas is generated due to an abnormality in the secondary battery 10. The first electrode tab 340 may be welded to the bottom part 110 through the second hole 364. The first insulating plate 360 may be replaced with an insulating tape or an insulating sheet, etc. The position or number of each of the first hole 362 and the second hole 364 may be changed as necessary or according to design specifications.

The second insulating plate 370 may prevent the second electrode plate 320 from being electrically connected to the cap assembly 500. In some embodiments, the second electrode plate 320 may not be in direct contact with the cap assembly 500 due to the existence of the second insulating plate 370. The second insulating plate 370 may have a first hole 372 communicating with the core 380 and a second hole 374 through which the second electrode tab 350 passes. The first hole 372 may allow the gas to move toward the cap assembly 500 if gas is generated due to an abnormality in the secondary battery. The second hole 374 may be provided in plurality. The second electrode tab 350 may be welded to a cap-down 550 described later by passing through the second hole 374. In some embodiments, the second hole 374 may serve as an inlet through which the electrolyte is injected into the electrode assembly 300 during an injection process. The position or number of each of the first hole 372 and the second hole 374 may be changed as necessary or according to design specifications.

Although not shown in the drawings, other current collecting structures may be applied to the secondary battery. In some embodiments, the first and second non-coating portions may be notched in a certain geometry to serve as the first base material tab and the second base material tab, respectively. The first base material tab and the second base material tab may be electrically connected to a first current collector plate and a second current collector plate, respectively. The first current collector plate may be electrically connected to the can. The second current collector plate may be electrically connected to the cap assembly in a state of being insulated from the can.

The cap assembly 500 may be coupled to the open end of the can 100. The cap assembly 500 may include a vent plate 530, the cap-down 550, an insulator 570, and a gasket 590. The cap assembly 500 may include the cap-up 510. The cap assembly 500 may be inserted between the beading portions 132 of the can 100 by using the gasket 590 as a medium. Each of the cap-up 510, the vent plate 530, and the cap-down 550 may include aluminum or an aluminum alloy, but the materials are not limited thereto.

The cap-up 510 may be disposed at the uppermost portion of the cap assembly 500. The cap-up 510 may have at least one piercing hole 512 where internally generated gas is discharged to the external environment. The cap-up 510 may have an approximately circular plate geometry. The cap-up 510 may have a portion of the can 100, which includes a center protruding convexly upward in a longitudinal direction of the can. A plurality of piercing holes 512 may be defined at a boundary between the circular plate portion and the protruding portion. The remaining portion in which the piercing hole 512 is not defined may be defined as a bridge. In FIG. 2, the vent plate 530 may be disposed at a lower portion of the cap-up 510.

The vent plate 530 may have an approximately circular plate geometry. The vent plate 530 may have an edge bent toward an edge of the cap-up 510 and may be in contact with the lower portion of the cap-up 510. The vent plate 530 may be bent again toward the inside of the can 100 around the portion that is in contact with the cap-up 510 so as to be in contact with an upper edge of the cap-up 510. In some embodiments, the vent plate 530 may be coupled in a form that wraps a portion of the upper and lower edges and a side surface of the cap-up 510. In FIG. 2, the cap-down 550 may be disposed at a lower portion of the vent plate 530. The vent plate 530 may have a partial area, which includes a center of a bottom surface and protrudes toward the cap-down 550. The protruding portion may be in contact with the cap-down 550 and be electrically connected by welding. An entire area of the vent plate 530, except for the protruding portion, may not be in contact with the cap-down 550. At least one notch 532 that functions as a vent may be provided on the vent plate 530. If a gas pressure inside the can 100 is greater than a predetermined pressure, the vent plate 530 may be reversed upward to rupture the notch 532. In some embodiments, the gas inside the can 100 may be quickly discharged to the external environment through the piercing hole 512 of the cap-up 510.

The cap-down 550 may be disposed at the lower portion of the vent plate 530 in FIG. 2. The cap-down 550 may have an approximately circular plate geometry. The cap-down 550 may support the cap-up 510 to prevent the cap-up 510 from being deformed by external force. An edge of the cap-down 550 may be bent toward the vent plate 530. An insulator 570 may be disposed at the bent portion. A partial area of a top surface, which includes a central portion, of the cap-down 550 may be in contact with the protruding portion of the vent plate 530 and then be welded. The cap-down 550 may also have a plurality of through-holes provided in a bottom portion 554 of the cap-down 550. In this manner, the internal gas may be discharged to the external environment through the notch 532 and the piercing hole 512 via the through-holes of the cap-down 550.

The insulator 570 may allow the vent plate 530 and the cap-down 550 to remain spaced apart from each other except for the welded portion at the center. In some embodiments, the insulator 570 may serve to insulate the vent plate 530 and the cap-down 550 from each other. The insulator 570 may be provided in a circular ring geometry having a certain width if viewed from the above. For example, the insulator 570 may include, but not limited to, polyethylene (PE), polypropylene (PP), polystyrene (PS), or ethylene-vinyl acetate copolymer (EVA). The insulator 570 may be coupled to the vent plate 530 and the cap-down 550 by ultrasonic welding, laser welding, or fusion.

The gasket 590 may be installed such that it wraps the exterior of the vent plate 530 having the cap-up 510 and the vent plate 530 coupled to each other. The cap-up 510 and the vent plate 530 may be coupled to the can 100 by using the gasket 590 as a medium and be insulated from the can 100. The gasket 590 may include substantially the same or similar material as the insulator 570.

Advantageously, if the gas is discharged due to an increase in internal pressure, the notch may be ruptured, and the vent plate may be pushed upward. The vent plate is deformed, the center of the cap may be pushed upward, and the edge may descend relatively. The edge of the cap-up is pushed downward, the beading portion may be pressed, and the crimping portion may be broken. As a result, crimping force that fixes the cap assembly may be released. The gas pressure continuously increases, and the cap assembly may be separated from the can to allow rapid gas discharge. However, if the crimping force is too high, the cap-up may not be deformed even if the notch is ruptured. Rapid discharge may be impracticable because the gas discharge may only occur through the piercing holes of the cap-up. This may cause a limitation in which the can swelled, and a portion except for the cap-up is ruptured due to the pressure. Thus, it is important that the crimping force is released after the notch is ruptured to allow the rapid gas discharge. In some embodiments, the crimping portion may become thicker or thinner to achieve target crimping force. To increase the crimping force, the crimping portion may have an increased thickness. Low crimping force may be required for the rapid gas release and the separation of the cap assembly. Thus, an optimized design may be required for fixing the cap assembly and maintaining sealing force until the notch is ruptured while reducing the thickness of the crimping portion to lower the crimping force. Advantageously, embodiments of the present disclosure optimizes the thickness of the crimping portion.

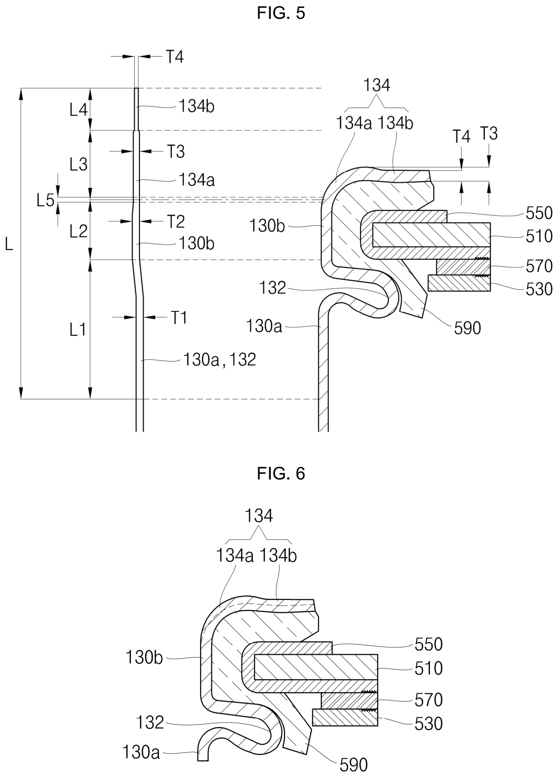

FIG. 4 illustrates a schematic cross-sectional view of the can. FIG. 5 illustrates a detailed cross-sectional view of the can. FIG. 6 illustrates a cross-sectional view of a crimping portion for adjusting crimping force;

FIG. 4 illustrates a simplified and exaggerated cross-section of the can 100. The side part 130 of the can 100 may include a side lower area 130a and a side upper area 130b. In some embodiments, an end of the side part 130 may be an area provided as the crimping portion 134 and may include two areas 134a and 134b each of which has a thickness that gradually decreases compared to the side part 130. The two areas 134a and 134b may be referred to as a crimping round portion 134a and a crimping straight portion 134b. The beading portion 132 may be provided on the side lower area 130a.

Referring to FIGS. 5 and 6, the side part 130 may be referred to as the side lower area 130a may include an area on which the beading portion 132 is provided. A left hand side drawing of FIG. 5 illustrates a thickness and length of an area, on which the beading portion 132 and crimping portion 134 are disposed, and does not provide a one-to-one correspondence with the right hand side drawing (i.e., a length of L1 is illustrated at the left hand side is not the same as a length of the corresponding area illustrated at the right hand side). A portion of the side part 130 adjacent to the lower portion of the beading portion 132 may be referred to as a side lower area 130a, and a portion of the side part 130 adjacent to the upper portion of the beading portion 132 may be referred to as a side upper area 130b. In some embodiments, the area of the crimping portion 134, which has the rounded cross-sectional geometry, may be referred to as the crimping round portion 134a, and the area of the crimping portion 134, which has the approximately straight cross-sectional geometry, may be referred to as the crimping straight portion 134b. In FIG. 5, the crimping straight portion 134b may be in contact with a top surface of the gasket 590. The crimping straight portion 134b may be substantially parallel to the top surface of the gasket 590. FIGS. 5 and 6 illustrate an end of the gasket 590 not extending to the outside of the end of the crimping straight portion 134b. However, even if the gasket 590 is longer to extend to the outside of the end of the crimping straight portion 134b, the structure of the crimping portion 134 may be applied in the same manner.

For example, in the case of the cylindrical battery having a diameter of about 21 mm, a length L1 of the side lower area 130a including the beading portion 132 may be about 5 mm. A length L2 of the side upper area 130b may be about 2.1 mm. A length L3 of the crimping round portion 134a (the portion having the length L3 is rounded to generate the crimping round portion) may be 1.7 mm. A length L4 of the crimping straight portion 134b may be about 0.8 mm. Therefore, the total length L from L1 to L4 may be about 9.60 mm. If the overall length L is changed, the length (L3+L4) of the crimping portion 134 may be a length of about 26% of the overall length L. The length L2 of the side upper area 130b may be a length of about 22% of the total length L. The length L1 of the side lower area 130a may be a length of about 52% of the total length L. A section (L5 section) connecting the side upper area 130b (L2 section) to the crimping round portion 134a (L3 section) may be viewed as an area on which the crimping round portion 134a begins. The L5 section may be viewed as the side upper area 130b in position or as the crimping round portion 134a (for convenience, the L5 section is referred to as an 'overlapping section'). Thus, the overlapping section L5 may be defined as a section overlapping the section L2 of the side upper area 130b and the section L3 of the crimping round portion 134a. For example, the overlapping section L5 may be disposed at a portion having a length of at most about 2 mm, if the length L2 of the side upper area 130b is about 2.1 mm. In some embodiments, for example, the overlapping section L5 may be a section that occupies about 0.1 mm in the section L2 of the side upper area 130b and about 0.1 mm in the section L3 of the crimping round portion 134a. In some embodiments, the length of the overlapping section L5 may be about 0.2 mm.

In some embodiments, thicknesses (T1 and T2) of the side lower area 130a and the side upper area 130b may be substantially the same and may be about 0.25 mm. A thickness T3 of the crimping round portion 134a may be about 0.20 mm. A thickness T4 of the crimping straight portion 134b may be about 0.175 mm. The thickness T3 of the crimping round portion 134a may be less by up to about 20% compared to the thickness T2 of the side upper area 130b. The thickness T4 of the crimping straight portion 134b may be less by up to 30% compared to the thickness T2 of the side upper area 130b. A thickness reduction degree may be illustrated by a dotted line in FIG. 6. If the thickness T3 of the crimping round portion 134a is less by about 20% of the thickness T2 of the side upper area 130b, the thickness T3 may be about 0.2 mm. If the thickness T4 of the crimping straight portion 134b is less by about 30% of the thickness T2 of the side upper area 130b, the thickness T4 may be about 0.175 mm. A thickness of the can may decrease by passing through the L5 section in the side upper area 130b. Thus, if the thickness T2 of the side upper area 130b is about 0.25 mm, and the thickness T3 of the crimping round portion 134a is about 0.20 mm, the thickness of the L5 section may be approximately 0.215 mm.

According to the experimental results shown in Table 1, the crimping portion 134 has the thickness as described in the present disclosure, and crimping force may be about 73 kgf/cm² at room temperature and about 63 kgf/cm² at 90 degrees. As the thickness of the crimping portion 134 decreases, the crimping force may also decrease (an amount used is expressed as a ratio of the thickness excluding the reduced thickness if assuming that about 0.25 mm is about 100% of the basic thickness of the crimping portion).

**Table 1**

| Can(mm) | Used amount | Crimping force(kgf/cm²) | |
|---|---|---|---|
| | | Room temperature | 90 degrees Celsius |
| 0.25 | 100% | 73 | 63 |
| 0.23 | 92% | 70 | 60 |
| 0.21 | 84% | 66 | 56 |
| 0.19 | 76% | 62 | 52 |
| 0.17 | 68% | 60 | 50 |
| 0.15 | 60% | 55 | 45 |

Advantageously, the thickness of the crimping portion 134 may be precisely designed and changed relative to the thickness of the can 100 to provide the secondary battery 10 having the required crimping force.

The cylindrical battery may have a diameter of about 18 mm or about 21 mm. The optimized design of the thickness of the crimping portion may also be applied to a cylindrical battery having a diameter of about 46 mm.

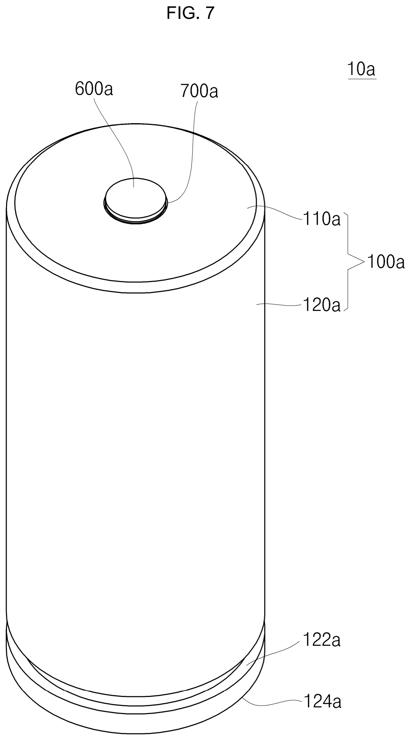

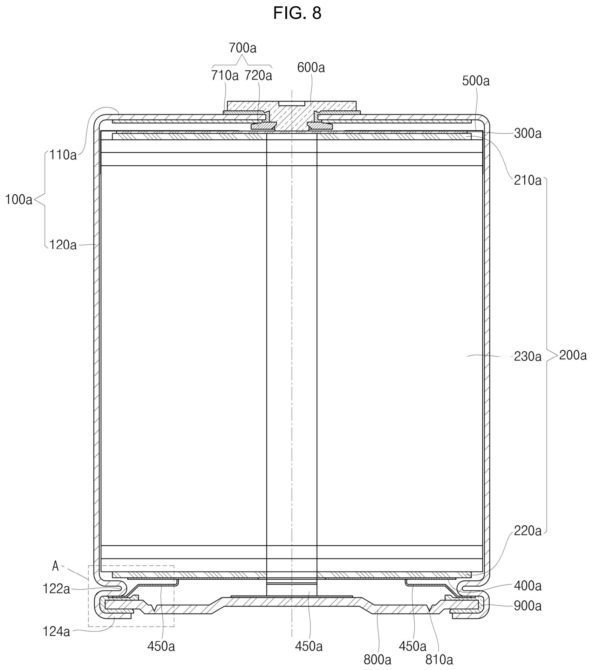

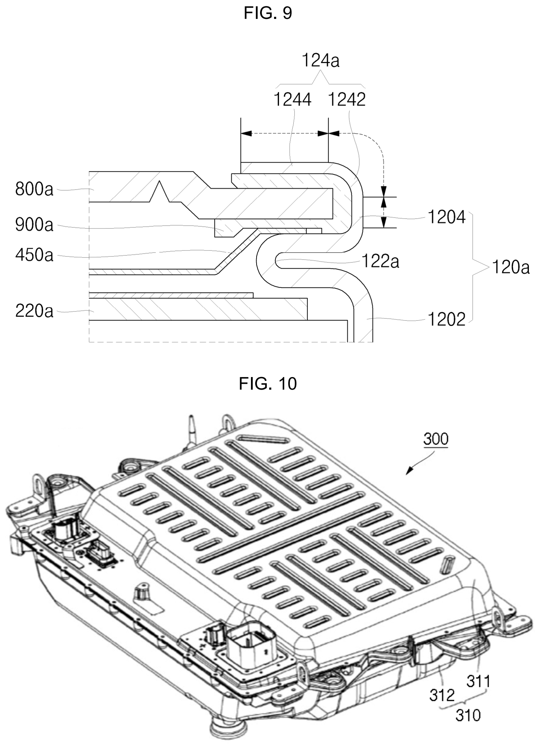

FIG. 7 illustrates a perspective view of the secondary battery. FIG. 8 illustrates a cross-sectional view of the secondary battery of FIG. 7. FIG. 9 illustrates an enlarged cross-sectional view of a portion A of FIG. 8.

Referring to FIGS. 7 to 9, a secondary battery 10a may include a can 100a, an electrode assembly 200a, a first current collector plate 300a, a second current collector plate 400a, a negative electrode lead 450a, an insulating member 500a, a positive electrode terminal 600a, a first gasket 700a, a cap plate 800a, and a second gasket 900a.

The can 100a may accommodate the electrode assembly 200a and an electrolyte and may have an approximately cylindrical shape. The can 100a may include a circular top surface part 110a and a side part 120a extending downward from the top surface part 110a. In some embodiments, the top surface part 110a may be referred to as a bottom part depending on a direction of the can 100a. The positive electrode terminal 600a and the first gasket 700a may be coupled to the top surface part 110a. In some embodiments, a terminal hole may be defined to pass through the top surface part 110a. A beading portion 122a and a crimping portion 124a may be disposed on a lower portion of the side part 120a. The lower portion of the can 100a is open, but a geometry in which an upper portion of the can 100a is opened may be applied.

When assembling the electrode assembly 200a into the can 100a, the top surface part 110a may be disposed downward to insert the electrode assembly 200a, thereby providing the beading portion 122a. Separation of the electrode assembly 200a may be prevented by the beading portion 122a. After the beading portion 122a is provided, the cap plate 800a and the second gasket 900a may be assembled to provide the crimping portion 124a, thereby preventing the cap plate 800a from being separated.

The electrode assembly 200a may include a first electrode plate 210a, a second electrode plate 220a, and a separator 230a. The first electrode plate 210a may be a positive electrode plate, and the second electrode plate 220a may be a negative electrode plate. The first electrode plate 210a may be substantially the same as or similar to the second electrode plate 320 as shown in FIG. 2. The second electrode plate 220a may be substantially the same as or similar to the first electrode plate 310 as shown in FIG. 2. The separator 230a may be substantially the same as or similar to the separator 330 as shown in FIG. 2.

For example, the electrode assembly 200a may be disposed so that a non-coating portion of the first electrode plate 210a protrudes upward from an upper end of the second electrode plate 220a. In some embodiments, the non-coating portion of the second electrode plate 220a may be disposed to protrude downward from a lower end of the first electrode plate 210a and may be wound in a jelly-roll geometry. In some embodiments, the first current collector plate 300a may be welded to the non-coating portion of the first electrode plate 210a, and the second current collector plate 400a may be welded to a non-coating portion of the second electrode plate 220a.

The first current collector plate 300a may be disposed between the top surface part 110a and the non-coating portion of the first electrode plate 210a. The first current collector plate 300a may be electrically connected to the first electrode plate 210a, which is a positive electrode plate, by welding, and thus, the first current collector plate 300a may be defined as a positive electrode current collector plate. The first current collector plate 300a may have an approximately circular geometry. The first current collector plate 300a may be electrically connected to the positive electrode terminal 600a at a central portion. However, the first current collector plate 300a has to be insulated from the can 100a. Thus, a plate-shaped insulating member 500a may be provided between the first current collector plate 300a and the can 100a.

The second current collector plate 400a may be disposed between the cap plate 800a and the non-coating portion of the second electrode plate 220a. The second current collector plate 400a may be electrically connected to the second electrode plate 220a, which is a negative electrode plate, by welding, and thus, the second current collector plate 400a may be defined as a negative electrode current collector plate. The second current collector plate 400a may have an approximately circular geometry. The second current collector plate 400a may be electrically connected to the side part 120a of the can 100a by a plurality of negative electrode leads 450a. In some embodiments, although not shown in the drawing, the second current collector plate 400a may be directly welded and electrically connected to the side part 120a of the can 100a without the negative electrode lead 450a.

The negative electrode lead 450a may have a plate shape having a predetermined length and width. The negative electrode lead 450a may be a conductor and may electrically connect the second current collector plate 400a to the side part 120a of the can 100a. One end of the negative electrode lead 450a may be electrically connected to the second current collector plate 400a, and the other end of the negative electrode lead 450a may be inserted between the beading portion 122a and the second gasket 900a so as to be electrically connected to the side part 120a. For example, the one end of the negative electrode lead 450a and the second current collector plate 400a may be welded to each other, and the other end of the negative electrode lead 450a may be welded to the side part 120a or may not be welded to the side part 120a. Because the negative electrode lead 450a may be fixed by the beading portion 122a, the second gasket 900a, and the crimping portion 124a without the welding, the welding between the side part 120a and the negative electrode lead 450a may be omitted. Because the second current collector plate 400a and the negative electrode lead 450a are electrically connected to each other, and the negative electrode lead 450a is electrically connected to the side part 120a, the can 100a may have a negative polarity.

The insulating member 500a may have a hollow circular plate geometry and include an insulating material. A lower part of the positive electrode terminal 600a and the first current collector plate 300a may be in contact with each other and thus be electrically connected to each other through a hollow of the insulating material 500a. The insulating material 500a may cover a top surface of the first current collector plate 300a except for the hollow. In some embodiments, the insulating member 500a may have substantially the same size as the first current collector plate 300a or a size greater than that of the first current collector plate 300a. In some embodiments, the insulating material 500a may be attached to the inside of the top surface part 110a of the can 100a.

The positive electrode terminal 600a may be installed to be insulated from the top surface part 110a of the can 100a by the first gasket 700a. The positive electrode terminal 600a may have an upper portion exposed to the outside of the top surface part 110a and a lower portion that is in contact with the first current collector plate 300a and is electrically connected to the first current collector plate 300a. For example, the positive electrode terminal 600a may be a rivet terminal that is riveted to the top surface part 110a inside or outside the can 100a.

The first gasket 700a may insulate the positive electrode terminal 600a and the can 100a from each other. For example, the first gasket 700a may include an upper gasket 710a that insulates the positive electrode terminal 600a and an outer surface of the top surface part 110a from each other and a lower gasket 720a that insulates the positive electrode terminal 600a and an inner surface of the top surface part 110a from each other. In some embodiments, the upper gasket 710a and the lower gasket 720a may be provided to be integrated with each other. In some embodiments, the lower gasket 720a may lengthily extend to replace the role of the insulating member 500a. The insulating material 500a may be inserted between the lower gasket 720a and the first current collector plate 300a.

The cap plate 800a may be a plate having an approximately circular geometry and may be coupled to the side part 120a by using the second gasket 900a as a medium. The cap plate 800a may be divided into a flat area, which is an edge area, and a vent area (an area excluding the flat area) provided to be stepped with respect to the flat area. The cap plate 800a may be fixed to the can 100a by the beading portion 122a and the crimping portion 124a. The flat area may be a portion fixed by the beading portion 122a and the crimping portion 124a. Because the second gasket 900a is disposed between the cap plate 800a and the side 120a, the cap plate 800a may be insulated from the can 100a. Thus, the cap plate 800a may have a neutral polarity (non-polarity) without any negative or positive polarity. A notch 810 for gas discharge may be provided in a plate surface of the cap plate 800a. The notch 810 may be provided in the vent area.

The crimping portion 124a may have a thickness less than that of the side part 120a.

FIG. 9 is illustrated based on a lower portion of the secondary battery 10a of FIG. 8 facing upward, and the cap plate 800a being disposed at an upper side. Thus, directions of upper and lower portions in following descriptions should be understood as directions based on FIG. 9 (if FIG. 8 is used as a reference, the upper and lower portions are opposite to each other).

Referring to FIG. 9, the side part 120a may include a side lower area 1202 (that is, an area in a direction of the top surface part in FIG. 8) and a side upper area 1204 (that is, an area in a direction opposite to that of the top surface part in FIG. 8) with respect to the beading portion 122a. The crimping portion 124a may include a crimping round portion 1242 and a crimping straight portion 1244. A solid line in FIG. 9 distinguishes the side upper area 1204, the crimping round portion 1242, and the crimping straight portion 1244 from one another.

For example, the total length from the side lower area 1202 to the crimping straight portion 1244 may be about 12.7 mm. In some embodiments, a length of the side lower area 1202 including the beading portion 122a may be about 7.1 mm. A length of the side upper area 1204 may be about 1.4 mm. A length of the crimping round portion 1242 may be about 1.45 mm. A length of the crimping straight portion 1244 may be about 2.75 mm. If the overall length is changed, the length of the crimping portion 124a including the crimping round portion 1242 and the crimping straight portion 1244 may correspond to about 33% of the overall length (if assuming that the length of about 12.7 mm is 100%). The length of the side upper area 1204 may correspond to about 11% of the total length. The length of the side lower area 1202 may correspond to about 56% of the total length.

Thicknesses of the side lower area 1202, the side upper area 1204, the crimping round portion 1242, and the crimping straight portion 1244 may be the same as thicknesses of the portions in FIG. 5, respectively.

When processing the beading portion, a portion of the side part may be cut off to be thinner. As such, when manufacturing the can, the area of the side part, on which the beading portion is provided, may be thicker than other areas. After processing the beading portion, the side lower area (or beading area) may be thicker than the side upper area.

The thickness of the crimping portion may be adjusted, except for the beading portion. In some embodiments, if the thickness of the crimping portion is reduced, the crimping may be released at a relatively low pressure, resulting in quick opening and gas release.

The secondary battery may be used to manufacture a battery pack (reference numbers for components described below are reference numbers that are applied only to the corresponding drawings).

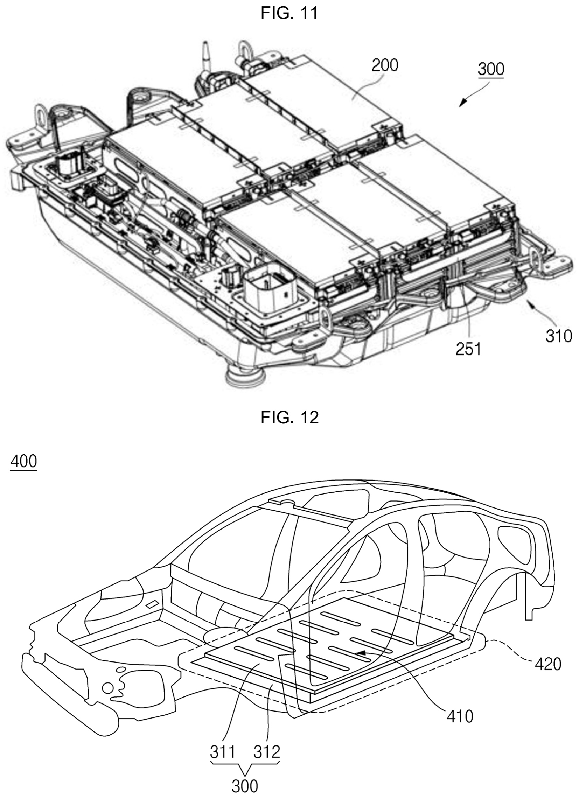

FIGS. 10 and 11 are perspective views showing a battery pack including a secondary battery 100.

Referring to FIGS. 10 and 11, the battery pack 300 may include a plurality of battery modules 200 and a housing 310 for accommodating the plurality of battery modules 200. For example, the housing 310 may include first and second housings 311 and 312 coupled in opposite directions through the plurality of battery modules 200. The plurality of battery modules 200 may be electrically connected to each other by using a bus bar 251, and the plurality of battery modules 200 may be electrically connected to each other in a series/parallel or series-parallel mixed method, thereby obtaining desired (e.g., required) electrical output. In the drawings, components such as busbars for the electrical connection of battery cells, cooling units, and external terminals are omitted. In some embodiments, the battery pack 300 may be installed in a vehicle. The vehicle can be, for example, an electric vehicle, a hybrid vehicle, or a plug-in hybrid vehicle. The vehicle may include a four-wheel vehicle or a two-wheel vehicle.

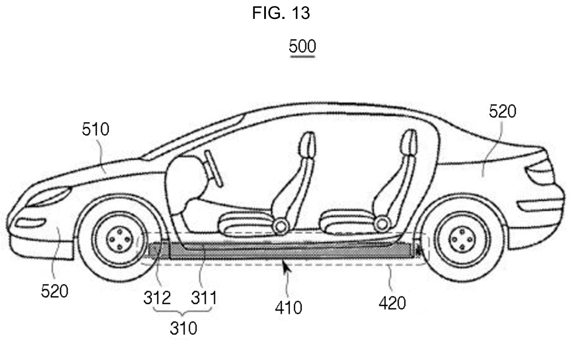

FIGS. 12 and 13 are perspective and side views, respectively, of an automobile 400, 500 including the battery pack 300. In FIG. 12, a battery pack 300 may include a battery pack cover 311, which is a part of a vehicle underbody 410 and may correspond to the first housing, and a pack frame 312, which is disposed under the vehicle underbody 410 and may corresponding to the second housing. The battery pack cover 311 and the pack frame 312 may be integrated with a vehicle floor 420. The vehicle underbody 410 separates the inside and outside of a vehicle, and the pack frame 312 may be disposed outside the vehicle.

In FIG. 13, a vehicle 500 may be formed by combining additional parts, such as a hood 510 in front of the vehicle 500 and fenders 520 respectively located in the front and rear of the vehicle 500 to a vehicle body pars 400. The vehicle 500 may include the battery pack 300 including the battery pack cover 311 and the pack frame 312, and the battery pack 300 may be coupled to the vehicle body part 400.

According to the embodiments of the present disclosure, the secondary battery having the target crimping force may be provided by adjusting the thickness of the crimping portion except for the beading portion. In some embodiments, if the thickness of the crimping portion is reduced, the crimping may be released at a relatively low pressure, resulting in quick opening and gas release.

Although the present disclosure has been described with reference to embodiments and drawings illustrating aspects thereof, the present disclosure is not limited thereto. Various modifications and variations can be made by a person skilled in the art to which the present disclosure belongs within the scope of the claims as appended hereto.

## Claims

1. A secondary battery comprising:
a cylindrical can, the can comprising an open end and a closed end;
an electrode assembly accommodated within the can; and
a cap assembly comprising a vent plate and a gasket, the vent plate disposed on the open end, the gasket comprising an insulating material and disposed between the vent plate and the can,
wherein a partial area of the open end has a thickness greater than a thickness of a remaining area.

2. The secondary battery as claimed in claim 1, wherein the can further comprises:
a circular bottom part; and
a cylindrical side part, the side part extending from the bottom part;
and optionally wherein the side part comprises:
a beading portion adjacent to the open end and has a concave inward geometry; and
a crimping portion having an end bent inwardly.

3. The secondary battery as claimed in claim 2, wherein the crimping portion has a thickness less than a thickness of the side part below the beading portion.

4. The secondary battery as claimed in claim 2 or claim 3, wherein the side part comprises:
a side lower area below the beading portion; and
a side upper area above the beading portion.

5. The secondary battery as claimed in claim 4, wherein the crimping portion has a thickness less than a thickness of the side upper area, and optionally wherein the thickness of the crimping portion is less than the thickness of the side upper area by less than or equal to about 20%.

6. The secondary battery as claimed in claim 4 or claim 5, wherein the crimping portion comprises:
a crimping round portion connected to and above the side upper area and having a rounded cross-sectional shape; and
a crimping straight portion connected to the crimping round portion and having a straight cross-sectional shape.

7. The secondary battery as claimed in claim 6, wherein the crimping round portion has a thickness less than a thickness of the side upper area.

8. The secondary battery as claimed in claim 7, wherein the crimping straight portion has a thickness less than the thickness of the crimping round portion.

9. The secondary battery as claimed in claim 8, wherein the crimping round portion has a thickness less than the thickness of the side upper area by less than or equal to about 20%.

10. The secondary battery as claimed in claim 9, wherein the crimping straight portion has a thickness less than the thickness of the side upper area by less than or equal to about 30%.

11. The secondary battery as claimed in any one of claims 4 to 10, wherein the side lower area and the side upper area have substantially the same thickness.

12. The secondary battery as claimed in any one of claims 2 to 11, wherein a terminal hole is defined to pass through the bottom part, and optionally wherein the terminal hole has a size less than or equal to a size of the bottom part.

13. The secondary battery as claimed in claim 12, further comprising:
a terminal coupled to the terminal hole; and
a second gasket disposed between the terminal and the bottom part, and optionally wherein the terminal is electrically connected to the electrode assembly.

14. The secondary battery as claimed in claim 13, wherein the terminal has a positive polarity.

15. The secondary battery as claimed in any one of the preceding claims, wherein the cap assembly further comprises:
a cap-down disposed between the vent plate and the electrode assembly; and
an insulator disposed between the vent plate and the cap-down, and optionally wherein the cap assembly further comprises a cap-up spaced apart from the vent plate and faces the exterior of the can.
